# EUROPEAN PATENT SPECIFICATION

(11) **EP 2 144 586 B1**
(45) Date of publication and mention of the grant of the patent: **14.01.2015**
(21) Application number: 08737133.2
(22) Date of filing: 29.04.2008
(51) Int. Cl.: A61G 7/10

(54) **CONTROLLER**
STEUERUNG
UNITÉ DE COMMANDE

(30) Priority: 02.05.2007 GB 0708470
(43) Date of publication of application: 20.01.2010
(73) Proprietor: Care-Knight Limited, Staffordshire, ST4 3AL (GB)
(72) Inventor: GREENWOOD, Annette, Elvina, Staffordshire ST4 3AL (GB)
(74) Representative: Swindell & Pearson Limited
(86) International application number: PCT/GB2008/001493
(87) International publication number: WO 2008/135721

(56) References cited:
- EP-A- 0 361 397
- EP-A- 0 486 215
- EP-A- 0 512 340
- EP-A- 1 561 445
- DE-U1- 29 601 503
- GB-A- 2 419 086
- "Archimedes bathlift - Operating Instructions", , 29 November 2006 (2006-11-29), XP055074627, Retrieved from the Internet: URL:http://www.rehabmart.com/PDFS/Archimed es-PDF%20Info.pdf [retrieved on 2013-08-08]
- "homecraft Bathmaster Xtra User's Manual", , 30 July 2004 (2004-07-30), XP055074629, Retrieved from the Internet: URL:http://www.gisglos.com/trainingdocs/Ba thmaster_Extra_Bathlift_User_Manual.pdf [retrieved on 2013-08-08]

## Description

This invention concerns controllers, controllers for bath lifts, and also bath lift assemblies.

Bath lifts are widely used to assist people getting in and out of baths. One type includes a flexible band which can extend across the top of a bath from a roller mechanism and can be held taut allowing a person to sit thereon. The band can then be fed out of the mechanism allowing the person to be lowered into the bath. The process can be reversed to raise a person out of the bath. The lift may be arranged such that when the band is extending across the top of the bath a small amount of power is constantly-applied to the mechanism to retain the band taut.

Such a bath lift is disclosed in GB 2 419 086 A.
"Archimedes bathlift - Operating Instructions", 29 November 2006 (2006-11-29), retrieved from the Internet: URL:http://www.rehabmart.com/PDFS/Archimedes-PDF%20Info.pdf and
"homecraft Bathmaster Xtra User's Manual", 30 July 2004 (2004-07-30), retrieved from the Internet: URL:http://www.gisglos.com/trainingdocs/ Bathmaster_Extra_Bathlift_User_Manual.pdf disclose bath lifts and their controllers.

There are potential dangers in having mains powered electrical items ir bathrooms, and a significant public resistance to having such arrangements has built up.

According to the present invention there is provided a controller for a bath lift which controller can be hand held by a user of the bath lift, the controller including one or more rechargeable electric cells, connection means permitting the controller to be selectively connected to a bath lift to control same, or to a recharging unlit to recharge the electric cell or cells, the controller also including operating controls selectively operable to cause the bath lift to raise or lower a person, the bath lift being powered by the electric cell or cells in the controller.

The connection means may include a lead which may extend to a connector which can be selectively connected to the bath lift or to a recharging unit for the electric cell or cells.

The connector includes control protection means which monitors the voltage of the electric cells, and when it is detected that the voltage falls below an upper predetermined level the control protection means prevents the bath lift from being lowered, whereby to prevent a person from becoming stuck in a bath because there is not sufficient power to lift them thereoutof.

The controller also includes a further control protection means which monitors the voltage of the electric cells, and when it is detected that the voltage falls below a lower predetermined level, said control means prevents the bath lift from being used at all, whereby to prevent the electric cells from being discharged so much that they cannot thereafter be fully recharged.

The upper predetermined level may be between 24 and 23 V, anc may be between 24 and 23.5 V. The lower predetermined level may be between 19 and 15 V and may be between 18 and 16 V.

The controller is configured to provide two power sources to a bath lift, a first substantially constant power source, and a second selectively controllable source. The first power source operates the bath lift to retair a band of the bath lift taut when in the raised position. The second source may selectively raise or lower the bath lift in response to the operating controls.

The electric cell or cells may be in the form of lithium batteries.

The invention also provides a bath lift assembly, the assembly including a bath lift and a controller according to any of the preceding seven paragraphs.

The bath lift may be of the type with a flexible band which is selectively movable between a raised position with the band extending taut across the top of the bath, and a lowered position with the band loose and extending down to substantially touch the bottom of a bath when a person is sitting on the band.

The bath lift may be arranged such that when the bath lift is on and the band is in the raised position, tension is applied to the band by the bath lift to retain the band taut.

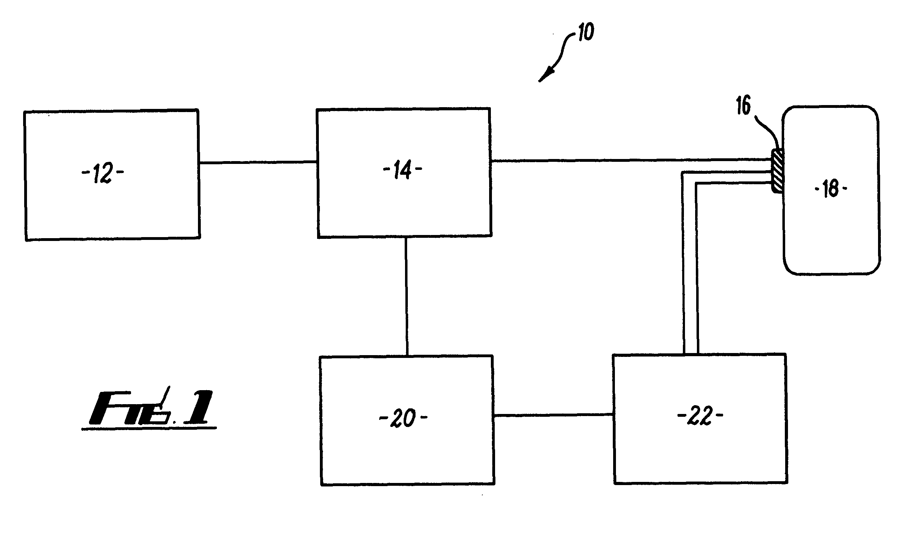

An embodiment of the present invention will now be described by way of example only and with reference to the accompanying drawings, in which:-
Fig. 1 is a block diagram of a controller according to the invention; and
Fig. 2 is a perspective view of the controller of Fig. 1;

The drawings show a controller 10 suitable for controlling a bath lift of the type with a flexible band which can be retained taut across the top of a bath for a person to sit on and can be fed out of a roller mechanism to allow the person to be lowered into the bath.

The controller includes a rechargeable unit 12 in the form of seven lithium ion batteries. The rechargeable unit 12 connects to a first protection unit 14 which measures the voltage and current provided by the rechargeable unit 12. The first protection unit 14 is configured to prevent connection of the rechargeable unit 12 to the bath lift 18 when the voltage of the rechargeable unit 12 falls below a lower predetermined limit, which in this instance is 17 V. The first protection unit connects to a connector 16 which can connect with a recharging unit or a bath lift 18 as required

The first protection unit 14 also connects to a second protection unit 20 which monitors the voltage from the rechargeable unit 12 and particularly detects whether the voltage of the rechargeable unit has fallen below an upper predetermined voltage, which in this instance is 23.75 V. The second protection unit 20 connects to a control unit 22 which has up and down controls. The control unit 22 connects to the connector 16.

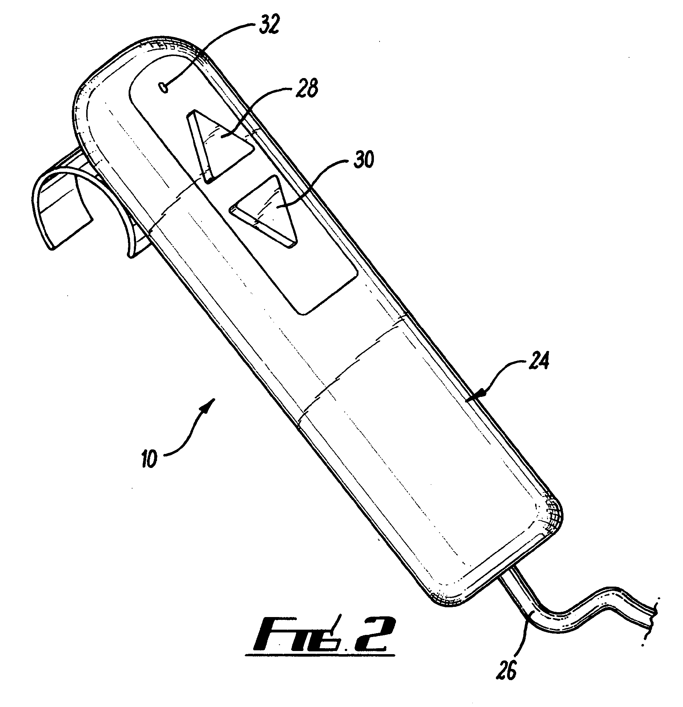

Fig. 2 shows the controller 10 in the form of a waterproof body 24 which locates the units 12, 14 and 20. An electric lead 26 extends from the body 14 to the connector 16 (not shown in fig 2). Up and down control buttons 28, 30 are provided which are manually operable by a person on the bath lift 18. A warning light 32 is provided to indicate when the voltage of the rechargeable unit 12 is low and thus recharging should take place.

In use, the rechargeable unit 12 can be recharged by connecting the connection 16 to the recharging unit 18 which can be mains powered and located away from a bathroom. The recharging unit 18 may indicate when the rechargeable unit 12 is fully charged. Once this is the case the controller 10 can be used to control a bath lift 18, with the connector 16 connected to the bath lift 18.

The body 24 can be held by a person on the bath lift 18. If the bath lift 18 is in a raised position a person can sit on the band thereof. The voltage of the recharging unit 12 is measured by the first protection unit 14, and presuming the voltage is above 17 V the bath lift 18 can be operated. A constant electrical current is fed from the unit 14 through the connector 16 which is used to provide a small charge to the bath lift to retain the band taut.

The first protection unit 14 also detects for any possible undercurrent and in the event that this is significant, will prevent operation of the bath lift 18. The first protection unit 14 also detects over voltage from the recharging unit 18, and if detected will disconnect the rechargeable unit 12 therefrom to protect same.

The second protection unit 20 also monitors the voltage of the rechargeable unit 12. If this is detected as being greater than 23.75 V, and the down button 30 is pushed, this will cause the bath lift 18 to operate to feed out the band causing a person to be lowered into a bath. If however it is detected that the voltage has dropped below 23.75 V, the control unit 22 will not permit this downward movement, and the warning light 32 will be lit.

Once a person wishes to get out of the bath, the up button 28 is depressed causing the band to be wound into the bath lift, thereby lifting the person out of the bath. Once the band is at its highest position, a small amount of current will continue to be supplied to the bath lift such that tension is applied thereby to the band to retain it taut, until the bath lift is switched on.

There is thus provided a controller for a bath lift which provides a number of advantages. The controller provides the power for the bath lift but can be recharged away from the bath lift, thereby preventing the requirement for mains power in a bathroom. The first protection unit prevents the rechargeable unit from being discharged so much such that damage will occur and full recharge will not be possible. The first protection unit also provides protection against overcharging and overcurrent discharges. The second protection unit prevents a person becoming stuck in a bath, but allows the lift to operate such that a person in a bath can be lifted thereoutof.

Whilst the invention has been described in terms of a controller for a bath lift and also a bath lift assembly incorporating such a controller, it is be realised that such a controller could be used in a wide range of other operations to provide security against total discharge of rechargeable units, and also to prevent an operation taking place when a rechargeable unit is at a low level of charge.

Various other modifications may be made without departing from the scope of the invention. For instance a different arrangement or type of electric cells could be used. Different controls could be provided.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon within the definition of the appended claims.

## Claims

1. A controller (10) for a bath lift (18), which controller (10) can be hand held by a user of the bath lift (18), the controller (10) including one or more rechargeable electric cells, connection means permitting the controller (10) to be selectively connected to a bath lift (18) to control same, or to a recharging unit (12) to recharge the electric cell or cells, the controller (10) also including operating controls (28, 30) selectively operable to cause the bath lift (18) to raise or lower a person, the bath lift (18) being powered by the electric cell or cells in the controller (10), wherein the controller (10) also includes first (14) and second (20) control protection means configured to monitor the voltage of the electric cells such when it is detected by the second control protection means (20) that the voltage has fallen below an upper predetermined level the second control protection means (20) prevents the bath lift (18) from being lowered but allows the bath lift (18) to operate such that a person in a bath can be lifted thereoutof, and when it is detected by the first control protection means (14) that the voltage has fallen below a lower predetermined level the first control protection means (14) prevents the bath lift (18) from being used at all, whereby to prevent the electric cells from being discharged so much that they cannot thereafter be fully recharged, the controller (10) being configured to provide twc power sources to a bath lift, a first substantially constant power source, and a second selectively controllable source, **characterised in that** the first power source operates the bath lift (18) to retain a band of the bath lift taut when in the raised position.

2. A controller according to claim 1, in which the connection means includes a lead which extends to a connector (16) which can be selectively connected to the bath lift (18) or to a recharging unit (12) for the electric cell or cells.

3. A controller according to claims 1 or 2, in which the lower predetermined level is between 19 and 15 V.

4. A controller according to claim 5, in which the lower predetermined level is between 18 and 16 V.

5. A controller according to any of the preceding claims, in which the upper predetermined level is between 24 and 23 V, and desirably between 24 and 23.5 V.

6. A controller according to any of the preceding claims, in which the second source selectively raises or lowers the bath lift (18) in response to the operating controls (28, 30).

7. A controller according to any of the preceding claims, in which the electric cell or cells is in the form of lithium batteries.

8. A bath lift assembly, the assembly including a bath lift (18) and a controller (10) according to any of the preceding claims.

9. A bath lift according to claim 8, in which the bath lift (18) is of the type with a flexible band which is selectively movable between a raised position with the band extending taut across the top of the bath, and a lowered position with the band loose and extending down to substantially touch the bottom of a bath when a person is sitting on the band.

10. A bath lift according to claim 9, in which the bath lift (18) is arranged such that when the bath lift (18) is on and the band is in the raised position tension is applied to the band by the bath lift to retain the band taut.

## Patentansprüche

1. Steuerung (10) für einen Badewannenlift (18), wobei die Steuerung (10) durch einen Nutzer des Badewannenlifts (18) in der Hand gehalten werden kann, wobei die Steuerung (10) eine oder mehrere wiederaufladbare elektrische Zellen sowie ein Verbindungsmittel umfasst, das es ermöglicht, die Steuerung (10) wahlweise mit einem Badewannenlift (18) zu verbinden, um diesen zu steuern, oder mit einer Ladestation (12) zu verbinden, um die elektrische Zelle oder die elektrischen Zellen wiederaufzuladen, wobei die Steuerung (10) des Weiteren Bedienelemente (28, 30) umfasst, die wahlweise betätigt werden können, um den Badewannenlift (18) zu veranlassen, eine Person anzuheben oder abzusenken, wobei der Badewannenlift (18) durch die elektrische Zelle oder die elektrischen Zellen in der Steuerung (10) mit Strom versorgt wird, wobei die Steuerung (10) des Weiteren ein erstes (14) und ein zweites (20) Schutzsteuerungsmittel umfasst, die dafür ausgebildet sind, die Spannung der elektrische Zellen so zu überwachen, dass, wenn durch das zweite Schutzsteuerungsmittel (20) detektiert wird, dass die Spannung unter eine zuvor festgelegte Obergrenze gefallen ist, das zweite Schutzsteuerungsmittel (20) verhindert, dass der Badewannenlift (18) abgesenkt werden kann, aber einen Betrieb des Badewannenlifts (18) dergestalt gestattet, dass eine Person in einer Badewanne von dort herausgehoben werden kann, und wenn durch das erste Schutzsteuerungsmittel (14) detektiert wird, dass die Spannung unter eine zuvor festgelegte Untergrenze gefallen ist, das erste Schutzsteuerungsmittel (14) verhindert, dass der Badewannenlift (18) überhaupt verwendet werden kann, um dadurch zu verhindern, dass die elektrischen Zellen so stark entladen werden, dass sie anschließend nicht mehr vollständig wiederaufgeladen werden können, wobei die Steuerung (10) so ausgebildet ist, dass sie zwei Stromquellen für einen Badewannenlift bereitstellt, und zwar eine erste, im Wesentlichen konstante Stromquelle und eine zweite, wahlweise steuerbare Quelle, **dadurch gekennzeichnet, dass** die erste Stromquelle den Badewannenlift (18) so betreibt, dass ein Band des Badewannenlifts straff gehalten wird, wenn er sich in der angehobenen Position befindet.

2. Steuerung nach Anspruch 1, wobei das Verbindungsmittel ein Stromkabel umfasst, das sich zu einem Verbinder (16) erstreckt, der wahlweise mit dem Badewannenlift (18) oder mit einer Ladestation (12) für die elektrische Zelle oder die elektrischen Zellen verbunden werden kann.

3. Steuerung nach einem der Ansprüche 1 oder 2, wobei die zuvor festgelegte Untergrenze zwischen 19 und 15 V liegt.

4. Steuerung nach Anspruch 5, wobei die zuvor festgelegte Untergrenze zwischen 18 und 16 V liegt.

5. Steuerung nach einem der vorangehenden Ansprüche, wobei die zuvor festgelegte Obergrenze zwischen 24 und 23 V liegt und bevorzugt zwischen 24 und 23,5 V liegt.

6. Steuerung nach einem der vorangehenden Ansprüche, wobei die zweite Quelle den Badewannenlift (18) in Reaktion auf die Bedienelemente (28, 30) wahlweise anhebt oder absenkt.

7. Steuerung nach einem der vorangehenden Ansprüche, wobei die elektrische Zelle oder die elektrischen Zellen in Form von Lithiumbatterien vorliegen.

8. Badewannenliftanordnung, wobei die Anordnung einen Badewannenlift (18) und eine Steuerung (10) nach einem der vorangehenden Ansprüche umfasst.

9. Badewannenlift nach Anspruch 8, wobei der Badewannenlift (18) von dem Typ mit einem flexiblen Band ist, das wahlweise zwischen einer angehobenen Position, in der sich das Band straff über die Badewanne erstreckt, und einer abgesenkten Position, in der das Band gelockert ist und sich nach unten erstreckt, wo es den Badewannenboden im Wesentlichen berührt, wenn eine Person auf dem Band sitzt, bewegt werden kann.

10. Badewannenlift nach Anspruch 9, wobei der Badewannenlift (18) dergestalt eingerichtet ist, dass, wenn der Badewannenlift (18) eingeschaltet ist und das Band sich in der angehobenen Position befindet, durch den Badewannenlift eine mechanische Spannung an das Band angelegt wird, um das Band straff zu halten.

## Revendications

1. Unité de commande (10) pour un élévateur de bain (18), laquelle unité de commande (10) peut être tenue à la main par un utilisateur de l'élévateur de bain (18), l'unité de commande (10) comprenant une ou plusieurs piles électriques rechargeables, des moyens de connexion permettant à l'unité de commande (10) d'être connectée de manière sélective à un élévateur de bain (18) pour commander ce dernier, ou à une unité de recharge (12) pour recharger la ou les piles électriques, l'unité de commande (10) comprenant également des commandes d'actionnement (28, 30) pouvant être actionnées de manière sélective pour amener l'élévateur de bain (18) à soulever ou faire descendre une personne, l'élévateur de bain (18) étant alimenté par la ou les piles électriques dans l'unité de commande (10), dans lequel l'unité de commande (10) comprend également des premiers (14) et deuxièmes (20) moyens de protection de commande configurés pour surveiller la tension des piles électriques de telle sorte que lorsque il est détecté par les deuxièmes moyens de protection de commande (20) que la tension est tombée au-dessous d'un niveau prédéterminé supérieur les deuxièmes moyens de protection de commande (20) empêchent l'élévateur de bain (18) d'être descendu, mais penmettent à l'élévateur de bain (18) de fonctionner de telle sorte qu'une personne dans un bain peut être soulevée en dehors de celui-ci, et lorsqu'il est détecté par les premiers moyens de protection de commande (14) que la tension est tombée au-dessous d'un niveau prédéterminé inférieur les premiers moyens de protection de commande (14) empêchent totalement l'élévateur de bain (18) d'être utilisé, empêchant ainsi les piles électriques d'être déchargées à tel point qu'elles ne peuvent pas ensuite être entièrement rechargées, l'unité de commande (10) étant configurée pour fournir deux sources d'alimentation à un élévateur de bain, une première source d'alimentation sensiblement constante, et une seconde source pouvant être commandée de manière sélective, **caractérisée en ce que** la première source d'alimentation actionne l'élévateur de bain (18) pour maintenir une bande de l'élévateur de bain tendue lorsqu'il est en position relevée.

2. Unité de commande selon la revendication 1, dans lequel les moyens de connexion comprennent un fil de sortie qui se prolonge jusqu'à un connecteur (16) qui peut être relié de manière sélective à l'élévateur de bain (18) ou à une unité de recharge (12) pour la ou les piles électriques.

3. Unité de commande selon la revendication 1 ou 2, dans lequel le niveau prédéterminé inférieur est compris entre 19 et 15 V.

4. Unité de commande selon la revendication 5, dans lequel le niveau prédéterminé inférieur est compris entre 18 et 16 V.

5. Unité de commande selon l'une quelconque des revendications précédentes, dans lequel le niveau prédéterminé supérieur est compris entre 24 et 23 V, et de préférence compris entre 24 et 23,5 V.

6. Unité de commande selon l'une quelconque des revendications précédentes, dans lequel la seconde source soulève ou fait descendre de manière sélective l'élévateur de bain (18) en réponse à des commandes d'actionnement (28, 30).

7. Unité de commande selon l'une quelconque des revendications précédentes, dans lequel la ou les piles électriques sont sous la forme de batteries au lithium.

8. Dispositif élévateur de bain, le dispositif comprenant un élévateur de bain (18) et une unité de commande (10) selon l'une quelconque des revendications précédentes.

9. Elévateur de bain selon la revendication 8, dans lequel l'élévateur de bain (18) est du type à bande flexible laquelle est mobile de manière sélective entre une position relevée avec la bande s'entendant en étant tendue au travers de la partie supérieure de la baignoire, et une position abaissée, avec la bande relâchée et s'étendant vers le bas de manière à toucher sensiblement le fond d'une baignoire lorsqu'une une personne est assise sur la bande.

10. Elévateur de bain selon la revendication 9, dans lequel l'élévateur de bain (18) est agencé de telle sorte que lorsque l'élévateur de bain (18) est en fonctionnement et la bande est dans la position relevée, une tension est appliquée à la bande par l'élévateur de bain pour maintenir la bande tendue.
